# EUROPEAN PATENT APPLICATION

(11) **EP 4 803 743 A1**
(43) Date of publication of application: **09.09.2026**
(21) Application number: 25161608.2
(22) Date of filing: 04.03.2025
(51) Int. Cl.: F03D 17/00

(54) **WIND TOWER INSPECTION SYSTEM, KIT AND ASSOCIATED METHODS**

(71) Applicant: Siemens Gamesa Renewable Energy A/S, 7330 Brande (DK)
(72) Inventor: Soerensen, Johnny, 6920 Videbaek (DK); Jensen, Peder Mohr, 7000 Fredericia (DK)
(74) Representative: SGRE-Association

(57) **Abstract**

An inspection method (300), system (10) and kit (16) for inspecting the interior of a wind turbine tower, comprising installing one or more cameras on an external periphery of an existing wind tower lift, with the cameras directed towards the tower's interior. The wind tower lift is then actuated to traverse a travel path within the tower. During this traverse, the cameras capture images of the interior components, which are analyzed to detect any abnormal conditions within the wind turbine tower's components.

## Description

### TECHNICAL FIELD

The present invention relates generally to the field of wind turbine maintenance and inspection, and more particularly to systems, kits, and methods for inspecting the interior of wind turbine towers.

### BACKGROUND

Modern wind turbine towers are massive man-made structures, with many wind turbine towers reaching heights of 120 meters or more and diameters of over 9 meters at their base. This scale results in an internal volume that can exceed six thousand cubic meters, and the interior is typically compartmentalized by multiple platforms and service decks. These spaces are essential for housing critical structural components and service infrastructure, yet they also present significant challenges when it comes to routine maintenance and inspection.

Currently, the inspection of the interior of wind turbine towers is conducted manually by service technicians. These inspections require the physical presence of technicians who must traverse the wind turbine tower's interior, often using ladders or suspended platforms to access confined or hard-to-reach areas. The complexity of the internal structure, which includes numerous bolts, nuts, wedges, flanges, bolted joints, and preloads, means that every component must be meticulously examined for wear, damage, or misalignment. This manual process is not only time-consuming but also poses safety risks to the personnel involved.

The challenges of manual inspections are further compounded by the operating environment of wind turbines. Offshore installations, in particular, are subject to harsh weather conditions and environmental factors that can delay maintenance activities and increase the risk of accidents. Access to the interior of the wind turbine tower may be temporarily restricted if the decks or platforms are damaged or deemed unsafe, leaving critical defects unaddressed until safe entry is possible.

Even once technicians arrive on-site, the process of accurately detecting defects within the massive internal structure remains laborious and time-intensive. Platforms and decks can be comprised, and technicians must meticulously examine each platform, deck, ladder, wedges and connection points, often requiring the use of specialized equipment to access and evaluate hard-to-reach areas. This detailed inspection phase can significantly delay the initiation of repair work, prolonging the period during which the turbine remains vulnerable to further damage. Such delays are particularly critical following severe weather events or during periods of extreme operational stress. In addition, often a report is elaborated by the service technicians, involving manually taken pictures and a list of anomalies detected during their inspection, for example to determine the type of service action required, for docketing and for future analysis of the fault. This is also time consuming and laborious.

The problem becomes even more acute under adverse conditions such as after a strong storm or during winter, when the wind turbine tower is subjected to severe loading. In the case of floating wind turbines, dynamic forces due to foundation movement further stress the structure, increasing the likelihood of damage.

Given these challenges, there may be an urgent need for solution that enhances both the safety and efficiency of maintenance and inspection of the inner portion of wind turbine towers.

### SUMMARY

It is therefore an object of the disclosure to overcome at least one of the problems described above. The object is achieved by the independent claims. The dependent claims describe advantageous developments and modifications of the invention.

In a first aspect, the present disclosure is related to an inspection method for inspecting the interior of a wind turbine tower. The method may involve installing one or more cameras (e.g. encapsulated in a frame) on a periphery of an lift mounted within the wind turbine tower, with the one or more cameras optionally arranged to have a field of view directed towards a wall of the wind turbine tower.

In some embodiments, the one or more cameras are comprised in a device (e.g. the device encapsulated on a frame or mounting frame), wherein the device may further comprise a data communication interface and a storing means, such for storing data logs comprising images of a plurality of internal wind turbine components (e.g. structural components, decks, platforms, nuts, wedges, etc.).

In some embodiments, the lift may be an existing lift-already installed and commissioned-so that the method may be carried out by retrofitting the wind tower lift. In some embodiments, the installation may be temporary, such that the device can be released for use in another wind turbine.

The method may comprise actuating the lift to move along a travel path (e.g. a vertical travel path such as the lift's already predefined path) within the wind turbine tower and may involve obtaining a plurality of captured images of the interior of the wind turbine tower from the one or more cameras during the movement along the travel path. In an example, the method may further comprise analyzing the captured images to detect the presence or absence of an anomaly within the wind turbine tower.

One advantage of the disclosure is that the single device or kit, comprising the one or more cameras, and optionally further means such a processor/s and a communication interface, can be installed and used for servicing multiple wind turbine towers.

Thus, in some embodiments, the method comprises uninstalling the device for future use in another inspection.

Another advantage is that images can be analyzed, and abnormal conditions can be identified before initiating service actions, thus avoiding the need to climb and inspect deck by deck or manually capture pictures. This can be done on-site but before performing an inspection or a service action, to have a clear view of the tower internal condition and detect potential abnormal conditions (or the absence of abnormal conditions).

Another advantage is that the lift may be operated remotely, so that data can be analyzed and inspection can be at least partially performed even before a trip onsite. Offshore servicing trips are costly and complicated due to environmental conditions, and they could be impossible during adverse weather conditions during a storm. Therefore, another advantage is that it allows inspection even under hash weather conditions.

Yet another advantage is that personnel onsite may extract a memory from the device to obtain the captured images, even if there is not mobile data available (e.g. in a remote site offshore). This may avoid the need to retrieve multiple memories from multiple cameras arranged in different internal portions or platforms of the tower.

These advantages apply not only to the inspection method but also to the systems, kits, and devices described in this disclosure. A person skilled in the art will readily recognize these and additional advantages upon reviewing the following embodiments and aspects of this disclosure.

In an example, the analyzing step may further comprise comparing observed data derived from the captured images with reference data obtained under predetermined reference conditions. In an example, the method may further include obtaining a data log, wherein the captured images are compiled for display, storage, and/or transmission.

Additionally, the method may include synchronizing the captured images with positional data from the lift to correlate each image with a specific location within the wind turbine tower.

In some embodiments, at least one of the captured images may be scanned (e.g. by personnel or by internally by a processor comprised in the device) for identifying structural elements and/or specific tower portions that include machine readable identifiers to facilitate such correlation. For example, each deck might have a machine-readable identifier such that the personnel can clearly correlate the captured imaged to the location in the wind turbine tower. In an example, this can be done automatically by a processor of the device.

The method may further comprise triggering a maintenance or servicing action based on the analysis of the captured images or the compiled data log.

More specifically, in an example, a wind turbine may comprise an existing lift, for service personnel and cargo, mounted within a wind turbine tower and configured for vertical movement along a predetermined travel path. The lift, which is typically already part of a wind turbine tower of a wind turbine, may traverse the entire height-or a significant portion-of the wind turbine tower's interior, thereby enabling a comprehensive inspection along the vertical dimension.

Moreover, the travel path of the lift may traverse at least half, or in some examples two thirds, of the wind turbine tower's height.

In an example, the one or more cameras are mounted either externally (by a device couple through a resalable coupling) or integrated within a structure of the lift. The latter might be preferably if the lift is already manufactured for use with the method of the present disclosure.

In some embodiments, cameras may be positioned such that their field of view is directed toward a wall of the wind turbine tower and outwards from the lift, more specifically towards inspection targets, namely the wind tower internal components which are confined within a space therebetween the tower wall and the lift.

In an example, the one or more camaras (encapsulated in a frame and preferable comprised in a device with storing means), capture high-resolution images of the internal surfaces along the travel path of the lift.

In various embodiments, the cameras may be encapsulated within a frame to ensure stability and proper orientation, and they may include wide-angle lenses (e.g., providing a field-of-view of at least 150°, 180°, or even 300°) to maximize coverage and minimize blind spots. In an example, the cameras are mounted within the frame with stabilization means, to properly capture the images and/or videos.

In some embodiments, the actuating of the lift may be performed remotely and not on-site. This enables remote inspections, avoiding unnecessary trips, and greatly improving servicing efficacy since abnormal conditions may be identified beforehand.

In a second aspect, the disclosure is related to a wind tower lift system for inspection of a wind turbine tower. The system may comprise an existing wind tower lift mounted within the wind turbine tower that includes a plurality of wind tower internal components, such that it may be retrofitted or a kit temporally installed for inspection, and later removed.

In an example, the lift is manufactured and designed to incorporate the system as described in this second aspect.

In some embodiments, the wind tower lift may be configured for vertical movement along a travel path within the wind turbine tower. One or more cameras may be mounted external to the wind tower lift, optionally, integrated within a structure of the wind tower lift.

In an example the system comprises the wind turbine tower.

These one or more cameras may have a field of view directed towards a wall of the wind turbine tower and may be configured to capture images of the wind tower internal components positioned in an interior of the wind turbine tower along the vertical travel path.

A control module may be configured to receive commands for operating the lift along the travel path, and a communication interface may be configured to transmit operational data to a storing means. The operational data may comprise the images of the wind tower internal components captured by the one or more cameras.

In some embodiments, the one or more cameras may be installed on a periphery of the wind tower lift in such a way as to allow an unobstructed field of view of the interior of the wind turbine tower. This configuration may facilitate efficient data gathering during the lift's travel along the travel path, since images of the wind tower internal components may be recorded at various heights.

In some embodiments, the wind tower lift may be retrofitted into an existing wind turbine tower, allowing the system to be implemented without significant changes to the original tower design. Alternatively, the system may be deployed temporarily, permitting its relocation from one wind turbine tower to another as needed.

In some embodiments, the control module may optionally include remote-control capabilities, such by communicating with a data communication interface which is configured to receive external commands and communicate to the control module, thus enabling personnel to operate the wind tower lift from a remote location. In such case, the operational data could be analyzed in real time or stored for later review, helping reduce the need for manual inspections of the wind tower internal components.

In some embodiments, the communication interface may comprise a wired or wireless link to the storing means. This may allow the images of the wind tower internal components (7) to be transmitted in real time to a remote server, where they may be processed using automated or semi-automated inspection algorithms. Alternatively, a local storing means may be used, so that personnel onsite can retrieve the images directly from a memory device.

In an example, the system may incorporate a communication interface configured to transmit operational data-which may include the captured images along with any associated metadata-to a storing means. In various embodiments, the communication interface may support both wired (e.g., Ethernet) and wireless (e.g., Wi-Fi or cellular) connectivity options, thereby facilitating real-time or near-real-time data transmission.

A processing unit of the device (e.g. forming part of the kit) or of the control module of the lift, may be configured to trigger image acquisition at predefined intervals or in response to specific positional cues, ensuring that the captured images accurately reflect the lift's location within the wind turbine tower.

Therefore, the control module may be programmed at the manufacturing stage of the lift to function within a system as described herein, or it may be retrofitted to cooperate with a newly installed kit by communicating via a data interface of the device/kit.

The kit or device can be attached and subsequently detached after use (e.g., to allow reuse for another wind turbine inspection), and it may be operated remotely, such as from a remote station or device (e.g., an output data unit of the kit in which data is also stored). The kit may be communicated with the control module of the lift, by means of a data communication interface, such that when operated remotely it is able to control the actuation of the lift.

The storing means may include local storage devices, cloud-based storage systems, or remote storage devices integrated as part of the overall system, enabling flexible options for data retrieval, archival, and further analysis.

In some embodiments, the system may further integrate with diagnostic software to analyze the captured images for any abnormal conditions or anomalies, thereby prompting timely maintenance actions.

In embodiments, the system may further comprise a data log where a processor compiles the operational data for display, storage, and/or transmission, and a data output unit that may be integrated at a designated location within the wind turbine tower or configured to be accessed remotely.

The system may include associated light sources to enhance image capturing under low-light conditions.

In yet another aspect, the disclosure is related to a kit intended to be installed on an lift of a wind turbine tower for performing an inspection of the wind turbine tower's interior. The kit is suitable for carrying out the method according to the first aspect.

The kit may be retrofitted permanently or temporally installed on ab existing lift of wind turbines and aims to automate and streamline the collection of inspection data within the wind turbine tower.

One or more cameras configured to capture images while in motion along a vertical plane corresponding to the travel path of the lift, the cameras being encapsulated in a frame;

The kit may comprise one or more cameras housed in a frame, a releasable coupling configured to securely affix the frame to a wind tower lift, a storing means for storing data logs, and a communication interface configured to transmit operational data to the storing means. When the frame is affixed on the lift in an operative position, the one or more cameras may have a field of view extending outwardly from the wind tower lift, thus allowing an unobstructed view of the wind tower internal components to be captured during the lift's travel path.

In some embodiments, in conjunction or alternative to any of the above, the one or more camaras are integrated on an image capturing device comprising movable mechanism operatively coupled to the one or more cameras and configured to adjust the vertical field of view of the one or more cameras. This may be particularly useful to capture components underneath the platforms or in particularly hard to reach places.

In an example, the movable mechanism includes:
(a) a support bracket arranged to hold the one or more cameras; and
(b) a motorized pivot assembly having a pivot hinge and a servo motor, the motorized pivot assembly being adapted to tilt the one or more cameras between approximately 0 degrees and at least 20 degrees relative to a horizontal reference axis, in particular any range between 0 and 90 degrees.

In an example, the image capturing device comprises a multi-joint arm can extend or retract the camera both vertically (and sometimes horizontally), offering a broad range of motion.

In an example, the one or more cameras can move vertically along a rail or track, changing its height while possibly maintaining a fixed angle. This effectively shifts the field of view up or down.

In an example, the device may comprise a gimbal assembly which provides additional degrees of freedom, enabling both vertical and horizontal adjustments (or even rotational adjustments) for a stabilized view.

The communication interface may be operatively connected to the processing unit and configured to transmit operational data-including the captured images-to a storing means. In addition, the communication interface may be linked with a control module of the lift, such that remote commands given from an external source, are transmitted to the control module to generate an electronic signal for actuating the lift (e.g. for stopping, starting, or reversing a travel path).

In embodiments, the kit facilitates the acquisition of high-resolution images while the lift is in motion, thereby reducing the reliance on manual inspections, enhancing overall maintenance efficiency, and using already mounted infrastructure which at the moment is only intended for transporting personnel or cargo within its cabin, maximizing efficiency.

In some embodiments, the releasable coupling may be arranged on or underneath the wind tower lift in such a way as to facilitate quick installation or removal. This arrangement may enable operators to transfer the kit from one wind turbine tower to another, streamlining inspection procedures across multiple sites. In other words, the portability and in particular the releasable coupling allows the kit to be easily installed on multiple wind tower lifts across different sites, facilitating widespread and systematic inspection programs.

In one embodiment, the releasable coupling includes a mechanical bracket arranged to clamp onto a structural portion of the wind tower lift. The bracket may comprise one or more adjustable jaws configured to grip a frame member of the lift and a quick-release mechanism, such as a spring-loaded pin or latch, enabling rapid installation and removal of the kit. A secondary safety lock, for instance a padlock or a cotter pin, can be provided to prevent unintentional release of the coupling during operation, particularly in conditions subject to vibrations or sudden movements.

In another embodiment, the releasable coupling employs high-strength magnetic elements, such as neodymium magnets, positioned on the frame of the kit. These magnets are configured to create sufficient holding force when brought into contact with ferromagnetic surfaces of the lift. A release lever or handle can be incorporated to facilitate detachment by breaking the magnetic seal when removal of the kit is desired. Optionally, a protective layer of rubber or polymer may be placed between the magnets and the metal surface of the lift to reduce wear, scratching, and corrosion.

In a further embodiment, the releasable coupling comprises a rail-and-slide system. A dedicated rail may be attached to or integrated into the underside or side wall of the wind tower lift, and a mating slide or carriage is integrated into the kit frame. During installation, the carriage is slid along the rail to a predetermined position and locked in place using a pin or latch. This configuration allows for consistent and repeatable positioning of the kit relative to the lift, which can be advantageous when uniform data capture is desired during repeated inspections.

In yet another embodiment, the releasable coupling employs vacuum or suction-based attachments. One or more industrial-grade suction pads may be connected to a vacuum pump or similar pressure control means. Upon activation, negative pressure is generated between the lift surface and each suction pad, effectively anchoring the kit to the lift. A pressure sensor can be provided to monitor suction levels and alert an operator if the grip becomes compromised. To enhance safety, auxiliary tethers or lanyards can be attached as a redundancy measure in case of suction failure.

In still another embodiment, the releasable coupling uses a slot-and-key approach. In this configuration, the kit frame incorporates one or more keyed projections designed to engage corresponding slots formed in a bracket on the lift. After the keyed projections are inserted into the slots, a small rotation or lateral shift secures the kit in position. A locking pin or retaining mechanism may then be deployed to prevent accidental disengagement. This arrangement can be beneficial where the lift design already includes mating features or recesses suitable for insertion of the keyed projections.

It is to be understood that each of the foregoing embodiments may be combined with one another or adapted in various ways without departing from the spirit and scope of the present disclosure. Various alternate coupling structures, materials, and attachment methods may also be employed, as would be apparent to those skilled in the art.

In some embodiments, the storing means may comprise any suitable data storage device configured to archive data logs that include images captured by the one or more cameras. These data logs may later be used for offline analysis, for instance to detect anomalies or monitor the condition of wind tower internal components over time.

In an example, the a storing means may be a local memory device, a remote data output unit comprising a memory, or a connection to a cloud-based storage system

Depending on connectivity options, captured images and associated operational data may be saved locally and then, optionally, transferred at a later time, to a remote server.

Local storing may be particularly useful in remote wind farm locations (e.g. offshore), where reliable internet access can be intermittent or nonexistent. In such cases, on-site personnel can remove a memory from the device (comprising the one or more cameras, a data communication interface and the memory) and view on a laptop or tablet for inspection (e.g. before performing a servicing action, namely, evaluating where the servicing action might be required). This still greatly enhances the efficacy of the inspection, because personnel may not have to do the laborious time-consuming inspection physically. In other words, it can reduce manual inspection time and associated safety risks, as personnel may not need to climb each deck.

In some embodiments, the communication interface may be wired or wireless, optionally transmitting operational data directly to a local or remote server. This may permit near real-time monitoring of the captured images, or the ability to store them in a central repository for subsequent review by maintenance teams or automated inspection systems.

In an example, the communication interface and/or the control module may be further configured to receive remote commands from an external device (e.g. output data unit or remote station) In other words, an external source (e.g. output data unit or remote station) wireless communicated with the data communication interface, sends instructions, such that the control module of the lift sends a signal for actuating the lift (moving along a vertical travel path). In another example, the control module of the lift itself is configured to receive remote commands from the external source (e.g. output data unit or remote station).

The remote source (e.g. Output data unit or remote station) can further be configured to obtain the operational data and stored such operational data, for example in data logs.

The releasable coupling may include adjustable brackets or shock-absorbing materials that facilitate precise alignment and maintain the stability of the camera assembly even in the presence of vibrations. Further stabilization means can be installed within the frame, the camaras and the reusable coupling itself, allowing stabilization for adequately taking images under a moving environment (the lift).

In some embodiments, the kit comprises means for correlating image capture with the lift's vertical position, wherein such means may comprise either one or more positional sensors or, in an example, a timing mechanism (e.g., an internal clock or timestamp system) configured to compute the position based on a predefined tower velocity and timing signals.

By the images captured with its specific positions within the tower, maintenance teams can target interventions precisely where they are needed, reducing downtime and repair costs. For example, they can easily identify where an abnormal condition is present within the wind turbine tower.

The kit may also include a processing unit operatively connected to the one or more cameras.

In some embodiments, the processing unit may be configured to control the timing and triggering of image capture based on predefined intervals or, alternatively, in response to positional cues provided by auxiliary means.

In an example, the kit may include positional sensors (e.g. an encoder or distance sensor) that provide signals corresponding to the lift's position along the tower to the processor unit.

Alternatively (or in addition), a timing mechanism may be used, generating timing signals at predetermined intervals. The processing unit may then compute the lift's approximate vertical position based on the tower velocity and/or timing signals.

This correlation step enables more precise mapping of the images to specific tower sections, decks, or other internal structures.

The processing unit may perform preliminary image processing, data tagging, or even anomaly detection, thereby facilitating the rapid identification of abnormal conditions within the wind turbine tower's internal components.

In an embodiment, the processing unit is configured to at least identifies one or more wind tower internal components. Fore example, a machine learning algorithm may be trained to identify typical wind tower internal components to be inspected (decks, nuts, bolts, wedges, etc) facilitating a identification on the data logs to be inspected by personnel.

In addition, or as an alternative to the above, the processing unit is configured to at least identify an abnormal condition on one or more wind turbine internal components. For example, a machine learning algorithm may be trained to the presence or absence of abnormal conditions of wind tower internal components to be inspected (decks, nuts, bolts, wedges, etc.) facilitating an identification on the data logs to be inspected by personnel.

In an example, the processing unit may execute software algorithms (e.g. computer vision, pattern recognition, or machine learning) to identify particular structural elements such as nuts, wedges, or platforms-collectively referred to as wind turbine internal components-and detect an abnormal condition in of these one or more wind turbine internal components.

. The storing means may store the operational data as a comprehensive data log, which may be used for further analysis, display, or archival purposes. The storing means may be implemented as a local storage device, a cloud-based storage system, or a remote storage device that is part of the overall kit.

Optionally, in some embodiments, the kit may further include additional modules such as scanning devices for reading machine-readable identifiers placed on specific wind turbine tower components or on specific tower portions, such as decks, platforms, etc. Such additional modules may enhance the correlation between the captured images and the corresponding physical locations or structural elements within the wind turbine tower. E.g. The user can scan the high-resolution images, and immediately receive the component or the location where the picture was taken within the wind turbine tower. In another example, the processing unit may do this scan, and the user receives the images with the correlated position. In another example the user can do this scan by a mobile phone or tablet (e.g. a barcode or QR code).

These and other embodiments of the invention may be combined in various ways. In embodiments, the invention may facilitate rapid, safe, and comprehensive inspections of wind turbine tower internal components by reducing the need for manual inspection and allowing for automated data collection and analysis.

Overall, the kit as described herein may significantly improve the efficiency, safety, and accuracy of wind turbine tower inspections.

Advantageous configurations and embodiments of the invention have been described in the preceding sections. The advantageous features of the lift system, the kit, and the method can generally be combined in any technically feasible manner unless otherwise stated.

In another aspect, the present disclosure relates to a wind turbine that includes a rotor assembly with multiple blades, the rotor assembly being attached to a hub that is rotatably connected to a drive train housed within a nacelle. The nacelle, which also contains a generator, is mounted atop a tower. The wind turbine further includes the wind turbine lift system and/or the kit as described in any of the preceding embodiments.

In a further aspect, it is provided a a non-transitory computer-readable storage medium having stored thereon computer-executable instructions which, when executed by one or more processors of a wind tower lift system, cause the wind tower lift system to:
- initiate movement of a wind tower lift along a travel path within a wind turbine tower;
- control one or more cameras arranged on or adjacent to the wind tower lift to capture images of internal components of the wind turbine tower during the movement;
- transmit or store operational data, including at least the captured images or results of the analysis, to a data output unit or a remote location.

In some embodiments, the instructions cause the system to analyze the captured images to determine a presence or absence of an abnormal condition in one or more of the internal components.

In an example, cause the wind tower inspection system to receive remote control commands from a remote station, enabling a user to start, stop, or adjust the speed of the wind tower lift.

In an example, the instructions further cause the wind tower inspection system to correlate each captured image with a specific vertical position of the wind tower lift based on signals from at least one of:
- a positional sensor integrated with the lift;
- a timing mechanism from which the lift's position is calculated; or
- a combination thereof.

In an example, the instructions further cause the wind tower inspection system to distinguish between different types of internal components (including decks, platforms, bolts, or wedges) using at least one of a pattern recognition algorithm or a machine-learning model.

In an example, the instructions further cause the wind tower inspection system to generate an alert when an abnormal condition is detected, the alert being transmitted to a data output unit or a remote location for immediate review.

In an example, the instructions further cause the wind tower inspection system to store data logs containing both the raw captured images and meta-information, in examples including: timestamps, lift position, and/or analysis results, in a cloud-based storage system or in a local data output unit.

In example, the non-transitory computer-readable storage medium is a memory device such as a memory card, flash memory module, RAM module, CD-ROM, USB drive, internal hard drive, flash memory, SSD.

As will be appreciated, some embodiments of the present disclosure may be implemented as a method, system, or computer program product for inspecting the interior of a wind turbine tower using a wind tower lift. Accordingly, the invention may take the form of an entirely hardware-based system, an entirely software-based system, or a combination of both-generally referred to as a "module" or "system". The invention may also be embodied as a computer program product stored on a computer-readable medium, which performs operations related to image capture, data transmission, and analysis for wind turbine tower inspections. Any suitable computer-readable medium may be used, such as electronic, magnetic, optical, or semiconductor-based systems, including memory devices like RAM, ROM, Flash, or hard disks. The program code for carrying out the inspection operations, such as controlling lift movement or analyzing captured images for abnormalities, may be written in languages like Java, C++, or C, and executed either locally on the system or remotely via a network connection. for 7 seconds

Certain embodiments of the present disclosure-directed to inspecting the interior of a wind turbine tower using a specialized lift system or kit-may be implemented as a method, a system, or a computer program product. In this regard, the invention may take the form of a hardware-based embodiment (for example, dedicated electronics for image capture and processing), a software-based embodiment (for example, firmware running on a processor), or a combination of both.

Any suitable computer-readable medium may be employed to store program code or data logs associated with the inspection process, including but not limited to RAM, ROM, EPROM, EEPROM, Flash memory, or other storage devices. The program code may execute entirely on an on-board processor or partly on a remote server accessed via a network connection-thereby supporting local and/or remote analysis of captured images.

Such program code can be developed in an object-oriented or procedural programming language, as necessary to implement functions like controlling lift movement, capturing images, and detecting abnormalities. By accommodating both local and remote execution, the disclosed system can allow real-time or near-real-time monitoring, data sharing, and collaborative analysis of wind turbine tower conditions.

In another aspect, the present invention provides an output data output unit forming part of the kit, and/or of the wind turbine tower inspection system.

The output data may form part or be interpreted as a remote station, at which data is transferred (e.g. captured images), and where, optionally, control commands are sent to the system for operating the lift remotely (e.g. For performing a travel path). The latter is particularly useful to do the inspection without the need for service personnel onsite, particularly useful in offshore wind turbines, and further in particular after or during a storm, to assess the potential damage endured.

In some embodiments, the output data output unit may be configured to establish bidirectional communication with the inspection system, thereby enabling remote control of the lift's travel path as well as the reception, storage, and transmission of operational data captured by the system.

In some embodiment, the output data output unit comprises a data output unit communication interface configured to establish a bidirectional data link with the communication interface of the wind turbine tower inspection system as aforementioned.

In some embodiments, this communication interface may be implemented using wired protocols (such as Ethernet) or wireless technologies (such as Wi-Fi, cellular, or other wireless standards), thus ensuring flexible and reliable data exchange between the inspection system and the output unit.

Additionally, the output data output unit may further comprise a data unit control module operatively connected with the control module and/or the communication interface of the wind turbine tower inspection system.

In an example, the data unit control module may be configured to transmit control commands, including those originating from a remote location via a wireless data link, to trigger or alter the travel path of the wind tower lift. Such remote-control capabilities may allow for dynamic and responsive adjustments during inspection operations, thereby enhancing the overall system performance and safety.

Furthermore, the output data output unit includes means for storing data, which may be configured to receive and store operational data received from the wind turbine tower inspection system.

In some embodiments, the operational data comprises images or videos captured by one or more cameras as the lift traverses its travel path. The data storage means may be implemented as a local storage device, a cloud-based storage system, or as a remote storage device integrated within the unit, thereby offering flexible options for data retrieval, archival, and further analysis.

Optionally, in some embodiments, the output data output unit may also incorporate additional features such as a display and a user interface. In such embodiments, the display may be configured to present the operational data in real-time, while the user interface may allow an operator to input control commands or interact with the system for diagnostic or monitoring purposes. This integrated approach, combining a communication interface, a control module, and data storage means, ensures that the output data output unit is capable of supporting comprehensive remote operation and monitoring of the wind turbine tower inspection system.

In summary, the output data unit may comprise:
- a communication interface configured to establish a bidirectional data link with a communication interface of the wind turbine tower inspection system, wherein the bidirectional data link is implemented by at least one of a wired or wireless connection [e.g., Ethernet, Wi-Fi, cellular, satellite];
- a control module operatively connected to the communication interface, the control module configured to transmit control commands from a remote location to trigger a travel path of a wind turbine lift of the wind turbine tower inspection system, [for example via a web-based interface, a dedicated application, or an on-premises controller];
- a data storage module configured to receive and store operational data transmitted from the wind turbine tower inspection system, the operational data comprising images or videos captured by one or more cameras along the travel path, [E.g., data logs stored in random access memory (RAM), read-only memory (ROM), solid-state drives (SSD), or removable media].

### BRIEF DESCRIPTION OF THE DRAWINGS

Embodiments of the invention are now described, by way of example only, with reference to the accompanying drawings, of which:
FIG. 1 illustrates a wind turbine, a tower lift system and a kid according to an example of this disclosure.
FIG. 2 illustrates an schematic view of the kit according to an example of this disclosure.
FIG. 3 illustrates a method of inspection of an interior of a wind turbine tower according to an example of this disclosure.

The illustration in the drawings is in schematic form. It is noted that in different figures, similar or identical elements may be provided with the same reference signs.

### DESCRIPTON OF DRAWINGS

In the diagrams, like numbers refer to like objects throughout. Objects in the diagrams are not necessarily drawn to scale. Figures are only exemplary alternatives of carrying out the invention.

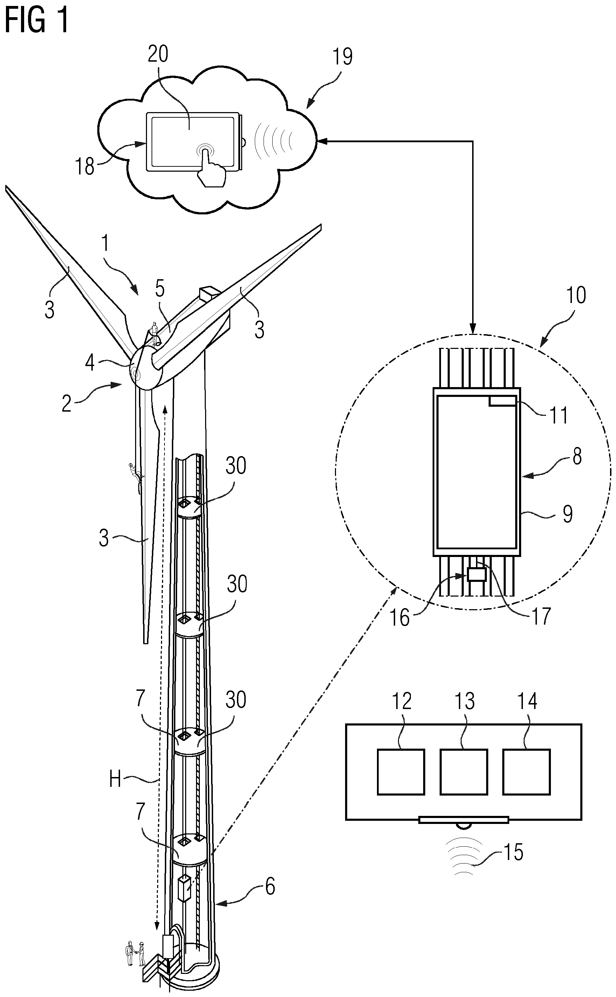

Referring to FIG. 1, a wind turbine assembly is generally illustrated. At the top, a nacelle (1) houses the turbine's main components, including the generator and, optionally, a gearbox, and is connected to rotor blades (3). The wind turbine tower (2) supports the nacelle (1) and is typically partitioned internally by a series of decks (30) or platforms that provide service personnel and may comprise various wind tower internal components (7) (e.g., nuts, wedges, bolted joints, electrical conduits, etc.).

Inside the wind turbine tower (2), there is a wind tower lift system (10). This system (10) comprises a wind tower lift (8) that is able to move along a predefined vertical travel path (H). The lift's structure includes an external periphery or structural frame (9), which provides mechanical support and defines the lift's overall shape. A control module (11) can be positioned on or integrated within the lift (8) to govern lift movement (e.g., starting, stopping, direction, adjusting speed).

Beneath or around the lift (8), the embodiment of FIG. 1, involves attaching a kit (16) for inspection purposes. The kit (16) may be comprise a frame securely mounted to the lift using a releasable coupling (17). In the example shown, the releasable coupling (17) is located at an underneath portion of the lift (8), though it may be attached to any suitable structural part. The frame of the kit (16) may house:
- One or more cameras (12) - to capture images of the interior of the tower (2), specifically the wind tower internal components (7) within the confined space within the wall of the wind turbine tower and the wind tower lift (8),
- A processing unit (13) - optionally, included for on-board image processing, anomaly detection, or correlation of the captured images with lift height or position.
- A communication interface (14) - enables operational data (including captured images) to be transmitted or stored in a stored storing means (32). In some configurations, this interface can be wireless, sending signals to a local receiver or a remote server.
- A movable mechanism - optionally, operatively coupled to the move or more camaras, such that the vertical field of view can be tilted.

Once installed, as depicted at the bottom right of FIG. 1, the one or more cameras (12) have a field of view extending outward from the lift (8) to observe the tower's inner walls and components (7). Because the lift traverses the entire vertical span (H) of the tower (2), the system (10) and kit (16) can capture images of multiple decks (30) and other structural features during a single ascent or descent.

At the top left in FIG. 1, a remote station (18) or data-shown with a screen or data output unit -can receive inspection data. In some embodiments, this data may be sent in near real-time via a communication link (19) (e.g., a wireless connection to the cloud). Alternatively, the images can be stored locally in a storing means (32), for example, through data logs. The data logs can be retrieved when the lift completes its run or after a few runs.

In some embodiments, the control module (11) is configured to receive and execute remote commands from a remote station (18) or similar external device, allowing the wind tower lift (8) to be operated without requiring an operator to be physically inside the tower. For instance, a technician located at a central operations center or a maintenance office offsite can remotely initiate the lift's upward or downward motion along the travel path (H). By leveraging secure communication protocols (e.g., wireless link (19) shown in FIG. 1), the control module (11) can receive instructions such as "start," "stop," or "direction" enabling automated scheduling of inspection runs at any time-day or night-depending on maintenance strategies. The data communication interface 14 can be connected (wired or wireless) and integrated within the same protocol, such that a remote command transmitted to the communication interface 14 is transmitted to the control modules 11 by a signal and it receives the instructions (e.g. "start," "stop," or "direction").

Furthermore, the remote-control functionality may be integrated with the system's data management capabilities. When the lift (8) moves through the tower interior, the communication interface (14) can transmit or store data (images, sensor readings) in the remote station (18) or in a local memory, thereby optimizing inspection workflows and minimizing the need for on-site personnel until it is truly necessary for a repair or closer manual examination.

Because the kit (16) is designed to be easily attached and detached by releasable coupling or detachable couplings (17), it can be transferred from one wind turbine tower (2) to another, thus streamlining inspection processes across multiple sites. The releasable coupling (17) is shown in the magnified view of the lift system (10), emphasizing how the frame of the kit (16) can be secured to the underside (or another part) of the lift (8).

The wind tower lift system (10) can include the kit (16) attached to an existing lift or the lift system comprising all the elements of the kit (16) but with said elements already integrated in the wind tower lift system (10) such as by having the one or more cameras (12) integrated or partially integrated within its frame, together with the data communication interface (14), storing means (32) and the processing unit (13).

The system allows for automated inspection. By using the lift (8)'s normal travel path (H), the system can methodically capture images of internal components (7) without requiring personnel to climb or stop at each deck (30).

The releasable coupling (17) allows quick installation and removal, making the system flexible for use in different towers (2).

The communication interface (14) can transmit images and operational data to the remote station (18) or local memory, facilitating immediate or later analysis, without personnel having to trip on site for a first inspection.

Optionally, the processing unit (13) may analyze images for anomalies (e.g., cracks, corrosion) in real time or store them for subsequent off-site analysis.

Because inspections can be conducted swiftly during regular lift operation, maintenance teams can identify issues proactively without significant wind turbine (1) shutdowns, enhancing availability and AEP (annual energy production).

Overall, FIG. 1 illustrates how the wind tower lift system (10), equipped with the kit (16), can serve as an efficient inspection tool for wind turbine towers. By using the lift's inherent vertical motion, the invention enables comprehensive, high-quality imaging of internal structures with minimal manual labor or intervention. FIG. 1 also depicts the lift system (1) in an embodiments of the invention. Other embodiments (not shown) may have the kit (16) partially integrated in the frame of the lift, without releasable coupling (17).

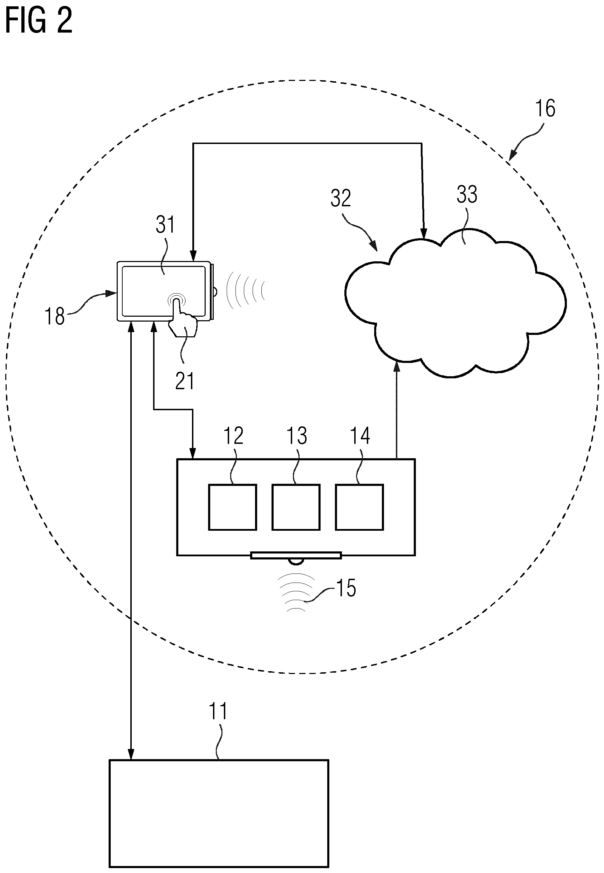

Referring to FIG. 2, the kit (16) is illustrated schematically, showing its main functional blocks and how it interacts with other components. In this embodiment, the kit (16) is designed to be removably attached to a wind tower lift (not explicitly shown in FIG. 2, but indicated in FIG. 1) by means of a releasable coupling (17), thus enabling rapid installation and detachment for use in different wind turbines. Within the kit (16), its found one or more cameras (12) configured to capture images of the interior of the wind turbine tower as the lift traverses a travel path (H) through the tower's decks (30).

The kit (16) may also incorporate a processing unit (13), which can locally analyze or pre-process the images captured by the cameras (12). For instance, the processing unit (13) could run anomaly detection algorithms or perform basic filtering before transmitting data via a communication interface (14). This communication interface (14) can operate through a wired and/or wireless network (15), ensuring that data logs and inspection results can be relayed in real time or just stored after completion of the lift run.

A notable aspect of the figure is the data output unit (18) or remote station, which can serve as a local or onsite hub for displaying, reviewing, and archiving inspection data. The data output unit (18) features a user interface (20) and a display (31), allowing technicians or other personnel to view captured images and system status. Via the communication interface (14) and network (15), the kit (16) may also connect to a remote location (19) or a cloud-based storage system (33) to offload, back up, or further process data. In particular, a storing means (32) is depicted in communication with the cloud-based storage system (33) for longer-term archiving, enabling inspection reports to be accessed across different workstations, locations, or by various stakeholders.

In practice, once the kit (16) is attached to the lift via the releasable coupling (17), operators can use the control module (11) to command lift movement. The cameras (12) capture images continuously or at defined intervals, while the processing unit (13) manages image processing or tagging with positional information. These images are then transmitted through the communication interface (14) over a wired and/or wireless network (15) to the data output unit (18), where an operator can view live or recorded footage on the display (31) and even annotate or mark up interesting findings through the user interface (20). Simultaneously-or at a later time-the data can be written to the storing means (32) or transmitted tp the cloud-based storage system (33), ensuring robust data retention and enabling remote experts at the remote location (19) to review the tower's internal condition without necessitating on-site presence.

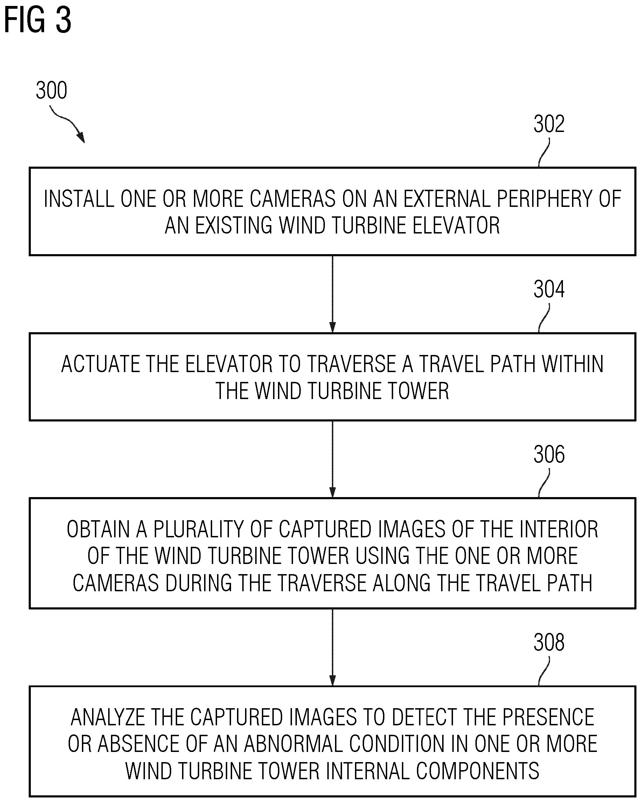

Referring to FIG. 3, a flow diagram (300) illustrates a method for inspecting the interior of a wind turbine tower using a wind tower lift. The method may comprise four primary steps.

The method (300) begins by installing one or more cameras (12) on an external periphery of an existing wind tower lift (8). For clarity, "external periphery" may include an underside or lateral portion of the lift frame-wherever the camera(s) can be placed to capture unobstructed views of the tower's internal components. The installation step may involve using a releasable coupling (17) (as shown in prior figures), so that the camera kit (16) can be quickly and securely attached. This initial setup is often done while the lift is stationary at the tower's base or an accessible platform.

Once the cameras are in position, an operator (either onsite or at a remote location) actuates the lift (8) to traverse a vertical travel path (H) within the wind turbine tower. This path typically extends from the tower's base toward nearly the tower atop, passing multiple internal decks (30) and structural components (7) along the way. The control module (11) may receive commands that define lift speed, start/stop positions, and/or dwell times at certain elevations to improve imaging detail.

As the lift moves, the cameras (12) capture a sequence of images of the interior of the wind turbine tower, including wind tower internal components (7) within the confined space within the tower wall and the wind tower lift (8). This step may occur automatically at fixed time intervals or can be triggered by specific events (e.g., after a certain vertical distance). Any processing unit (13) associated with the cameras can optionally perform preliminary image analysis or apply timestamps, geolocation data (lift position), and quality checks before transmitting the images via a communication interface (14) for storage or further processing.

Finally, the captured images are analyzed to detect the presence or absence of abnormal conditions in one or more wind turbine tower internal components (7). Optionally, an experienced can analyses the captured images to detect the abnormal condition.

In some embodiments, the analysis can be performed locally on the processing unit (13) (e.g., using edge computing techniques) or remotely (e.g., via a data output unit (18), a remote location (19), or a cloud-based storage system (33). Typical abnormalities include cracks, corrosion, missing fasteners, faulty decks, or misalignments in structural elements.. If an issue is flagged, maintenance teams can schedule targeted inspections or repairs, thus avoiding time-consuming manual checks across the entire tower interior.

By following the steps outlined in FIG. 3, operators achieve a streamlined inspection process that leverages the existing wind tower lift's normal traversal path. This approach significantly reduces manual labor, shortens inspection times, and enhances safety by minimizing the need for personnel to climb or repeatedly stop at each internal deck (30).

Although the present invention has been described in detail with reference to a exemplary embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

### LIST OF REFERENCES

1 wind turbine
2 rotor assembly
3 blades
4 hub
5 nacelle
6 wind turbine tower
7 wind tower internal components
8 wind tower lift
9 lift periphery
10 wind tower lift system
11 control module
12 cameras
13 processing unit
14 communication interface
15 wired and/or wireless network
16 kit
17 releasable coupling
18 data output unit
19 remote location
20 user interface
30 decks
H travel path
31 display
32 storing means
33 cloud-based storage system

## Claims

1. An inspection method for inspecting an interior of a wind turbine tower (6), the method comprising:
installing one or more cameras (12) on or adjacent to a structural portion of an existing wind tower lift (8) mounted within the wind turbine tower (6), wherein the one or more cameras (12) are arranged in such a way as to have a field of view at least partially directed outward from the wind tower lift (8) towards a wall of the wind turbine tower (6),
actuating the wind tower lift (8) to traverse a travel path (H) within the wind turbine tower (6),
obtaining a plurality of captured images of a wind tower internal components (7) within the interior of the wind turbine tower (6) using the one or more cameras (12) during the traverse along the travel path (H), and
analyzing the captured images to detect the presence or absence of an abnormal condition in one or more wind tower internal components (7).

2. The inspection method of claim 1, wherein the analyzing further comprises a step of comparing an observed data, derived from the captured images, with reference data under reference conditions.

3. The inspection method of claim 1 or 2, further comprising obtaining a data log, including the one or more captured images, the data log being configured for display, storage, and/or transmission.

4. The inspection method of any one of claims 1 to 3, further comprising correlating the image captured with a positional data from the wind tower lift (8), to identify each image in relation with a specific location within the wind turbine tower (6).

5. The inspection method of any one of claims 1 to 4, further comprising scanning at least one of the captured images for identifying one or more structural elements and/or tower portions captured within the images.

6. A wind tower lift system (10) for inspection of a wind turbine tower (6), the system (10) comprising:
a wind tower lift (8) mounted within a wind turbine tower (6), the wind turbine tower (6) comprising a plurality of wind tower internal components (7), the wind tower lift (8) being configured for vertical movement along a travel path (H) within a wind turbine tower (6);
one or more cameras (12) mounted external to the wind tower lift (8) or integrated within an structure of the wind tower lift (8), said one or more cameras having a field of view directed to capture images of the wind tower internal components (7) positioned in an interior of the wind turbine tower (6) along the vertical travel path (H),
a control module (11) configured to receive commands for operating the lift along the travel path (H),
a communication interface (14) configured to transmit or locally store operational data to a storing means (32), wherein the operational data comprises the images of the wind tower internal components (7) captured by the one or more cameras (12).

7. The wind tower lift system (10) of claim 6, further comprising a data log, wherein a processor is configured to compile the operational data into the data log, the data log being configured for display, storage, and/or transmission.

8. The wind tower lift system of claim 6 or 7, further comprising a data output unit (18) comprising the storing means (32), the data output unit:
integrated and mounted at a designated location within the wind turbine tower (6), and/or
external and configured to be accessed from a remote location (19).

9. The wind tower lift system (10) of any one of claims 6 to 8, wherein the control module (11) is configured to receive remote control commands, such that that the wind tower lift (8) is operable remotely to move along the travel path (H).

10. The wind tower lift system (10) of any one of claims 6 to 9, wherein the one or more cameras (12) are configured to provide a field-of-view covering at least 150°, in particular at least 180°, further in particular at least 300°.

11. The wind tower lift system (10) of any one of claims 6 to 10, further comprising at least one light source operatively associated with the one or more cameras for enhancing image capturing under low-light conditions.

12. A kit (16) for carrying out the method of any one of claims 1 to 5, the kit comprising:
- one or more cameras (12) housed in a frame,
- a releasable coupling (17) configured to securely affix the frame to a structure of a wind tower lift (8), wherein the frame and the releasable coupling (17) are arranged in an operative position determined by when the frame is affixed on the lift, such that in the operative position the one or more cameras have a field of view to capture images of wind tower internal components (7) disposed on or adjacent a wall of the wind turbine tower (6),
- a storing means (32), in particular storing a data logs on said storing means (32),
- a communication interface (14) configured to transmit or locally store operational data in the storing means (32), the operational data comprising the captured images.

13. The kit (16) of claim 12, further comprising a processing unit (13) operatively communicated with the communication interfaces (14), wherein the processing unit (13) is configured to process captured images and identify a wind turbine internal component (7), in particular further configured to to detect an abnormal condition in one or more wind tower internal components (7).

14. The kit (16) of claim 12 or 13, wherein the processing unit is configured to correlate captured images based on the lift's vertical position by any one of:
- one or more positional sensors operatively communicated with the processing unit (13), and/or
- a timing mechanism configure to generate a timing signal, such that the processing unit (13) is configured to compute the lift's vertical position derived from a tower velocity and/or timing signals.

15. The kit (16) of any one of claims 12 to 14, wherein the storing means (32) is configured to store the operational data in at least one of:
- a cloud-based storage system (33); and/or
- a data output unit (18), comprising a memory, said data output unit (18) being part of the kit.
